(19) Europäisches Patentamt
European Patent Office
Office européen des brevets

(11) EP 4 427 902 A1

(12) **EUROPEAN PATENT APPLICATION**

(43) Date of publication:
**11.09.2024 Bulletin 2024/37**

(21) Application number: **24161340.5**

(22) Date of filing: **05.03.2024**

(51) International Patent Classification (IPC):
***B29B 17/00*** *(2006.01)*

(52) Cooperative Patent Classification (CPC):
(C-Sets available)
**C08J 3/226; B29B 17/0042;** B29C 48/0017; B29C 48/04; B29C 49/0005; B29C 49/06; B29C 49/061; B29C 49/10; B29C 2049/023; B29K 2067/00; B29K 2067/003; B29K 2091/00; B29K 2105/26; B29K 2225/06; B29L 2031/712;

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2023 JP 2023033674**

(71) Applicant: **CANON KABUSHIKI KAISHA**
**Tokyo 146-8501 (JP)**

(72) Inventors:
- **ASHIBE, Tsunenori**
  **Tokyo, 146-8501 (JP)**
- **DOI, Yohei**
  **Tokyo, 146-8501 (JP)**

(74) Representative: **TBK**
**Bavariaring 4-6**
**80336 München (DE)**

(54) **STRETCH BLOW-MOLDED ARTICLE AND METHOD FOR PRODUCING STRETCH BLOW-MOLDED ARTICLE**

(57) A stretch blow-molded article comprising: a first polyester; and a second polyester having a structure different from a structure of the first polyester, wherein an intrinsic viscosity value of the first polyester is 0.60 to 0.74 dL/g, and the second polyester has a structure corresponding to terephthalic acid and a structure corresponding to bisphenol A.

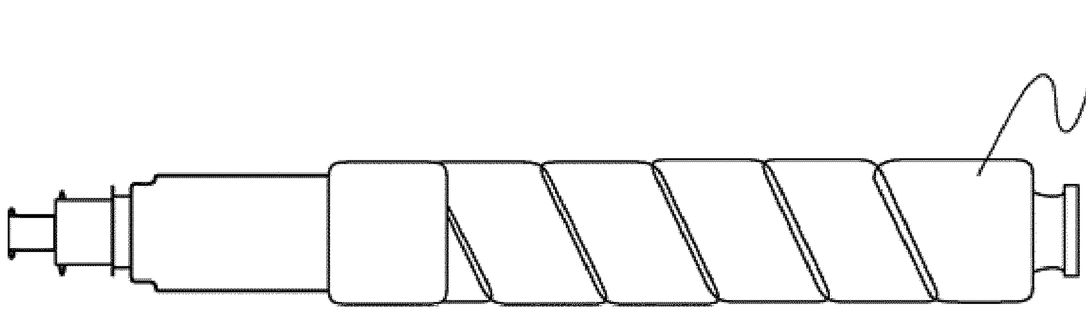


FIG. 10

EP 4 427 902 A1

(52) Cooperative Patent Classification (CPC): (Cont.)
B29L 2031/7158; B29L 2031/7678;
C08J 2300/30; C08J 2367/02; C08J 2467/02

C-Sets
**C08L 67/02, C08L 67/02, C08K 3/04;**
**C08L 67/02, C08L 67/025, C08K 3/04**

## Description

BACKGROUND OF THE INVENTION

Field of the Invention

The present disclosure relates to a stretch blow-molded article and to a method for producing a stretch blow-molded article.

Description of the Related Art

In electrophotographic image forming apparatuses, toner bottles that supply, for instance, toner have to be strong enough so as not to break even when dropped; accordingly, molded articles resulting from injection stretch blow molding of polyethylene terephthalate (hereafter also referred to as "PET"), which is a polyester resin, are often used in such toner bottles. For instance Japanese Patent Application Publication No. 2001-042626 discloses a toner bottle obtained through stretch blow molding.

Recycling of beverage PET bottles as new PET bottles has become widespread in recent years, for the sake of environment protection. Chemical recycling and material recycling are known PET recycling methods, as described in Japanese Patent Application Publication No. 2014-198422 (paragraphs [0008] and [0009]).

As disclosed in Japanese Patent Application Publication No. 2000-169623, chemical recycling requires a multi-stage process, and accordingly requires decomposition equipment and polymerization equipment, which translates into high recycling costs. Chemical recycling also has a significant environmental impact. When a PET resin from PET obtained through material recycling absorbs air moisture, the PET may undergo hydrolysis, and have the molecular weight thereof reduced, as a result of subsequent heating for pelletization. According to the "Handbook of Saturated Polyester Resins", edited by Kazuo Yuki, December 22, 1989, first edition, pages 224 to 225, published by Nikkan Kogyo Shimbun, PET resins exhibit a characteristic in that the crystallization time of the resin shortens as the molecular weight thereof decreases.

When such low-molecular-weight PET is used, preforms crystallize readily during stretch blow molding on account of the lower molecular weight, and thus blow molding defects are prone to occur. Methods that make up for such shortcomings of material recycling include mechanical recycling having a step of repolymerizing and adjusting intrinsic viscosity, as disclosed in Japanese Patent Application Publication No. 2014-198422 (paragraph [0010]).

SUMMARY OF THE INVENTION

However, solid phase polymerization which is known as a PET repolymerization method still incurs significant energy requirements, while imposing a large environmental load.

Moreover, bottle-to-bottle recycling is accomplished through solid phase polymerization, but the original molecular weight of PET used for yarn and sheets is considerably lower than that used for bottle molding. Therefore, recycled PET materials used for yarn and sheets are not used at all for bottle molding, and thus recycled PET that is amenable for use in stretch blowing is limited.

Studies by the inventors reveal that PET as a material resulting from recycling of recovered blow bottles (hereafter also referred to as "material-recycled PET" or "MR-PET") exhibits a lowered molecular weight, as pointed out above. Such PET resins with shorter molecular chains tend to exhibit a folded structure, which is one of crystalline states, and form spherulites easily. Also in attempts at biaxial stretch blow molding of preforms formed out of MR-PET pellets, therefore, spherulites may rapidly grow in the MR-PET, over the course of the process from preform molding up to blow molding. It is deemed that, as a result, the hardness of the preform increases rapidly in parts, giving rise to sites that cannot keep up with the stretching, whereupon the preform ruptures at those sites.

Meanwhile, raising the molecular weight of MR-PET by solid phase polymerization requires a large amount of energy, as pointed out above. Therefore, the inventors recognized the need for developing a blow bottle that allows for stable stretch blow molding even when using a polyester of reduced molecular weight such as MR-PET.

At least one aspect of the present disclosure aims at providing a stretch blow-molded article that can be molded stably even when using polyester of reduced molecular weight. At least one aspect of the present disclosure aims at providing a method for producing a high-quality stretch blow-molded article.

At least one aspect of the present disclosure provides a stretch blow-molded article specified in claims 1 to 6.

At least one aspect of the present disclosure provides a method for producing the above stretch blow-molded article specified in claims 7 to 9.

At least one aspect of the present disclosure provides a stretch blow-molded article that can be stably molded even when using polyester of reduced molecular weight. At least one aspect of the present disclosure provides a method

for producing a high-quality stretch blow-molded article. Further features of the present invention will become apparent from the following description of exemplary embodiments with reference to the attached drawings.

BRIEF DESCRIPTION OF THE DRAWINGS

FIG. 1 is a schematic diagram of an image forming apparatus;
FIG. 2 is a schematic diagram illustrating a method for molding a preform;
FIG. 3 is a schematic diagram illustrating a blow molding method;
FIG. 4 is an S-S curve in uniaxial stretching;
FIG. 5 is a sample shape for uniaxial stretching;
FIG. 6 is uniaxial stretching S-S curves for three types of sample;
FIG. 7 is a schematic diagram illustrating a ruptured blow bottle;
FIG. 8 is a schematic diagram of a twin-screw extruder;
FIG. 9 is a schematic diagram of single-stage blow molding; and
FIG. 10 is a schematic diagram of a blow bottle.

DESCRIPTION OF THE EMBODIMENTS

In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily.

Examples of implementations for carrying out the present disclosure will be explained next in detail with reference to accompanying drawings. However, the scope of the present invention is not limited to the following embodiments. In the explanation that follows, unless noted otherwise, the notation "%" signifies "mass%".

Polyester

The stretch blow-molded article comprises a first polyester and a second polyester having a structure different from a structure of the first polyester. The first polyester and the second polyester satisfy the two provisions a) and b) below.

Provision a): an intrinsic viscosity value of the first polyester is 0.60 to 0.74 dL/g.

Provision b): the second polyester has a structure different from a structure of the first polyester, and has a structure corresponding to terephthalic acid and a structure corresponding to bisphenol A.

The first polyester preferably comprises at least one selected from the group consisting of polyethylene terephthalate and polyethylene naphthalate. More preferably, the first polyester comprises polyethylene terephthalate (PET). Herein PET is obtained in a condensation reaction or transesterification reaction between terephthalic acid or an ester-forming derivative thereof, and 1,2-ethanediol or an ester-forming derivative thereof. The first polyester may be either copolymerized PET or a homopolymer. The first polyester may be a mixture with other resins. The first polyester preferably contains 60 to 100 mass% of PET, more preferably 80 to 100 mass%, and yet more preferably 90 to 100 mass%.

Formation of spherulites during stretch blow molding can be suppressed, and breakage during stretching can be prevented, through the use of a first polyester and a second polyester that satisfy the above provisions a) and b). As pointed out above, the molecular weight of recycled polyesters such as MR-PET may decrease on account of hydrolysis. An intrinsic viscosity value in the range of 0.60 to 0.74 dL/g denotes that the first polyester has short molecular chains, and low molecular weight, to some extent. For instance the above range, with values ordinarily found in MR-PET, is lower than that of PET for bottles, which is a so-called virgin material not having undergone ordinary recycling. Polyester exhibiting such an intrinsic viscosity value has a low molecular weight, and accordingly tends to form spherulites.

The first polyester may have an intrinsic viscosity value of 0.60 to 0.72 dL/g. A crystallization suppression effect is brought out more readily within this range.

As a method for reducing the likelihood of spherulite formation, for instance in the case of PET, Japanese Patent Application Publication No. 2013-159681 describes reducing the crystallization rate by copolymerizing isophthalic acid, besides terephthalic acid, during PET synthesis. As pointed out above, however, the only method for polymerizing isophthalic acid during recycling of PET involves chemical recycling, which is undesirable in terms of $CO_2$ reduction. The inventors endeavored therefore to modify the first polyester that is to be recycled, by mixing therewith a second polyester having a structure different from that of the first polyester.

As a result, the inventors found that just by mixing the first polyester and the second polyester, which have different structures, crystals that may eventually yield spherulites do not arise readily, i.e. the phenomenon of increased

density derived from molecular folding is less prone to occur, and thus stable blow molding can be accomplished. The inventors speculate the following as underlying reasons for the above. Firstly, the first polyester and the second polyester are both polyesters, and are therefore deemed to be well compatible with each other, and to become readily mixed uniformly with each other. However, the second polyester has a structure different from that of the first polyester, and accordingly constitutes a foreign substance to the first polyester. In resins that form spherulites, the higher the purity of the resin, the higher is ordinarily the likelihood of occurrence of spherulite formation; hence, formation of spherulites is arguably suppressed through mixing in of foreign matter.

It is deemed that the occurrence of spherulites such as those above can be more readily suppressed in a case where the first polyester comprises at least one selected from the group consisting of polyethylene terephthalate and polyethylene naphthalate (PEN). This is arguably because PET and PEN have a structure (terephthalic acid structure, naphthalene dicarboxylic acid structure) that is more readily compatible with the terephthalic acid of the second polyester. The explanation that follows will be based on PET as an example.

Herein PET has a structure corresponding to terephthalic acid, such that when the second polyester is mixed with PET, the terephthalic acid of the second polyester and the PET exhibit good compatibility and become readily mixed with each other uniformly. By contrast, bisphenol A, which is another component of the second polyester, is a substance exhibiting a structure different from that of PET, and therefore has a structure that is foreign to the first polyester.

As pointed out above, the higher the purity of a resin, the higher is the likelihood of spherulite formation, and hence it is deemed that introduction of foreign matter renders spherulite formation less prone to occur. Even if PET or PEN does not result from copolymerization with isophthalic acid or the like, formation of spherulites can be thus more readily prevented by just mixing in a polyester that is compatible with PET or PEN but that that has a different structure.

The first polyester is for instance recycled polyester. The first polyester may be recycled PET such as MR-PET, or may be virgin PET having undergone no reduction in molecular weight. The effects of the present disclosure are more pronounced, however, in a case where MR-PET, which is problematic in that it readily forms spherulites, is used as unmodified PET. Therefore, the first polyester is preferably a recycled material, and is more preferably material-recycled PET. The presence of the second polyester in the modified PET, and quantification of that second polyester, can be accomplished for instance by measurements based on FT-IR.

The structure corresponding to terephthalic acid is a structure resulting from condensation polymerization of terephthalic acid (including derivatives capable of forming a structure similar to that of condensation polymerization of terephthalic acid) in a polyester, and is specifically a structure represented by Formula (t) below. The structure corresponding to bisphenol A is specifically represented by Formula (b) below. The structure corresponding to bisphenol A is introduced into the polyester through the use of for instance an alkylene oxide adduct of bisphenol A, such as a propylene oxide adduct of bisphenol A, in the production of the polyester.

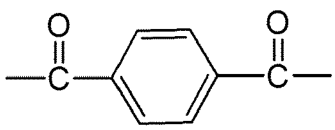

(t)

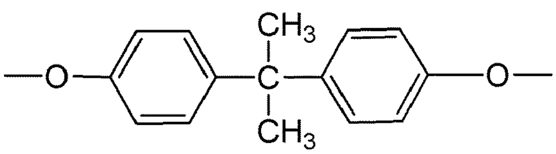

(b)

The content ratio of the structure corresponding to terephthalic acid in the second polyester is not particularly limited, but is preferably 15 to 50 mass% and more preferably 25 to 40 mass%. The content ratio of the structure corresponding to bisphenol A in the second polyester is not particularly limited, but is preferably 20 to 70 mass%, more preferably 40 to 60 mass%. Formation spherulites can be more readily suppressed within the above ranges.

Method for Producing the Second Polyester

As pointed out above, the second polyester according to the present disclosure has a structure corresponding to terephthalic acid and a structure corresponding to bisphenol A. The second polyester is for instance a condensation polymer of a monomer mixture that comprises terephthalic acid and an alkylene oxide adduct of bisphenol A.

A production example of the second polyester follows next.

- Propylene oxide adduct of bisphenol A (average 2.2-mol addition) 60.0 mol parts

- Ethylene oxide adduct of bisphenol A (average 2.2-mol addition) 40.0 mol parts
- Terephthalic acid 77.0 mol parts

The above polyester monomer mixture was charged into a 5-liter autoclave together with 0.2 mass% of dibutyltin oxide relative to the total amount of monomers, and the autoclave was fitted with a reflux condenser, a water separating device, an $N_2$ gas inlet tube, a thermometer and a stirring device, whereupon a polycondensation reaction was conducted at 230°C while under introduction of $N_2$ gas into the autoclave. The reaction time was adjusted so as to reach a desired softening point, and once the reaction was over, the resulting product was retrieved from the vessel, and was cooled and crushed, to yield a second polyester. The second polyester had a Tg of 58.5°C and a softening point of 90°C. In the examples of the present disclosure this second polyester will be referred to as Polyester (1).

The second polyester is preferably a polyester made up of an alkylene oxide adduct of bisphenol A and terephthalic acid. Such a polyester is however not limited to the above formulations and production method.

The content (compounding amount) of the second polyester is preferably 0.005 to 1.00 mass%, more preferably 0.05 to 1.00 mass%, relative to the total of the first polyester and second polyester. Crystallization of PET of reduced molecular weight can be more readily suppressed by prescribing the content to lie the above range. The effect of inhibiting crystallization is more readily brought out, and the effect of improving blow molding is likewise elicited more readily, when the content is 0.005 mass% or higher. When the content is 1.00 mass% or lower, by contrast, the influence of the second polyester is small, and the strength of the molded article is preserved satisfactorily even with PET of low molecular weight. Preferably, the second polyester is used mainly in toners, and preferably, the weight-average molecular weight of the second polyester is 10000 or lower. For instance, the weight-average molecular weight is 5000 to 10000. That is because given that the purpose of the second polyester is to control crystallization without detracting from the physical properties of the first polyester, then the lower the molecular weight and the higher the flowability of the second polyester, the more readily the second polyester mixes uniformly with the first polyester, and the easier it becomes to control crystallization.

Weight-average molecular weights are measured herein by gel permeation chromatography (GPC).

The content (compounding amount) of the first polyester is preferably 99.00 to 99.995 mass%, more preferably 99.00 to 99.95 mass%, relative to the total of the first polyester and the second polyester.

The total content ratio of the first polyester and the second polyester in the stretch blow-molded article is for instance 50 mass% or higher, preferably from 80 to 100 mass%, and more preferably 90 to 99.99 mass%.

The composition of the stretch blow-molded article, for instance in terms of the content of the first polyester and the second polyester, can be analyzed in accordance with the method below. The blow-molded article is dissolved in a solvent, and thereafter a soluble fraction alone is extracted by filtration and is subjected to qualitative and quantitative analyses by GC-MS and HPLC.

The second polyester is mainly formulated into electrophotographic toners, and accordingly a similar effect can be achieved by blending an electrophotographic toner in. That is, the second polyester may be a polyester that is contained in electrophotographic toners. In toner bottle recycling, only the resin in the bottle is ordinarily recycled, and hence a process is required, such as washing with water, in which a large amount of $CO_2$ is released. However, studies by the inventors have revealed that even in the absence of sufficient cleaning, crystallization of the first polyester can be suppressed in recycling using toner bottles with toner remaining therein. In consequence, this allows contributing to significantly reducing $CO_2$, which is the purpose of recycling.

In terms of obtaining a uniform and stable recycled material, ordinarily toner as a foreign matter is sufficiently removed, for instance by washing, in toner bottle recycling. Therefore, the content of polyester derived from toner is deemed to be lower than 0.005 mass%, in ordinary recycling of toner bottles that contain polyester.

The stretch blow-molded article may comprise carbon black. Carbon black is in some instances mixed into a stretch blow-molded article for reasons of appearance; however, carbon black can also serve as crystal nuclei of the first polyester. In addition, the first polyester has the specific intrinsic viscosity value, has a small molecular weight, and crystallizes readily. Spherulites may thus be likelier to occur when using carbon black in the first polyester which crystallizes readily. In the present disclosure, however, a good stretch blow-molded article can be obtained, even when carbon black is used, thanks to the spherulite suppressing effect elicited by the first polyester and the second polyester. The content (compounding amount) of carbon black in the stretch blow-molded article is for instance 0.01 to 0.20 mass%, or 0.02 to 0.10 mass%.

An explanation follows next on an embodiment of a method for producing a stretch blow-molded article such as a toner bottle, by biaxial stretch blow molding. The method for producing a stretch blow-molded article comprises a step of preparing a preform comprising at least a first polyester and a second polyester, and a molding step of obtaining the stretch blow-molded article through stretch blow molding of the preform.

An example will be illustrated first of a method for producing pellets that constitute a material for a preform used for the purpose of biaxial stretch blow molding of a stretch blow-molded article. For instance in the step of preparing a preform, pellets are molded through melt-kneading of the first polyester and the second polyester. The first polyester

and the second polyester may be mixed for instance in the contents (compounding amounts) described above. In a case where a polyester contained in an electrophotographic toner is used as the second polyester, the toner that comprises the second polyester, and the first polyester, are melt-kneaded, to thereby mold pellets. The pellets may comprise herein carbon black. For instance the first polyester may comprise carbon black.

For instance pellets can be formed through crushing and melt-kneading of a toner bottle, comprising a first polyester, and having adhered thereto electrophotographic toner comprising a second polyester. Through pelletization, the material formulation is thereby rendered uniform and easier to mold.

Specifically, the step of preparing a preform preferably has a step of forming pellets through crushing and melt-kneading of a recycled toner bottle having an electrophotographic toner adhered thereto, and a step of forming the preform out of the pellets. Preferably, the electrophotographic toner comprises the second polyester and the toner bottle comprises the first polyester.

The melt kneading means is not particularly limited, and a known means such as a twin-screw extruder may be utilized. FIG. 8 is a schematic diagram of a twin-screw extruder. A twin-screw extruder 201 uses a twin-screw to melt and knead a first polyester 203 and a second polyester 204 that are charged into a hopper 202. After being melt-kneaded, the resulting material is extruded into a string-like shape, is cooled in a water tank 205, and is then cut into pellets in a pelletizer 206, as a result of which the melt-kneaded product becomes molded into pellets amenable for injection molding.

The temperature during melt-kneading is not particularly limited, as long as the first polyester and the second polyester can be melt-kneaded. For instance the temperature is 200 to 300°C, preferably 240 to 280°C. The melt-kneading conditions are likewise not particularly limited, but it is considered that by controlling for instance vent degassing conditions it becomes possible to adjust the amount of residual moisture in the resin, such that the intrinsic viscosity value can be controlled through hydrolysis by that residual moisture.

A step of crystallizing the pellets after formation of the pellets by melt kneading may also be adopted. Workability during preform production is improved through crystallization of the pellets. Crystallization can be accomplished by keeping the pellets under conditions that preferably include a temperature of about 100 to 180°C, more preferably of about 130 to 170°C, preferably for about 1 to 12 hours, more preferably for about 3 to 7 hours, even when having been crystallized, the pellets can become amorphous on account of heating during production of the preform.

As illustrated in FIG. 2, a test tube-shaped preform 104 is molded next by injection molding, using the obtained pellets. Specifically, a heating cylinder 105 melts, through heating, a material having been charged into an injection molding machine 101, and an extrusion screw 207 injects thereupon the molten material into preform dies 102, 103, to mold the preform 104. In the step of preparing the preform, preferably, the preform is obtained from the obtained pellets by injection molding. Preferably, the preform has a test tube shape.

The molding step will be explained next. In the molding step, as illustrated in FIG. 3, the preform 104 is subjected to biaxial stretch blowing (biaxial stretch molding). Firstly, the preform 104 is placed in a heating furnace 107 and is heated up to a temperature that allows for stretching. The heating time herein is preferably 3 or fewer minutes. By setting the heating time to 3 or fewer minutes, it becomes possible to prevent that crystallization of a crystalline polyester should proceed within the preform during heating. After heating, the heated preform 104 is retrieved from the heating furnace 107 and is set at the mouth of a blow mold 108 in the interior of which a cavity is formed by combining a left die 108-1 and a right die 108-2.

Preferably the heated preform is placed at the mouth of the blow mold within a short time (for instance within 10 seconds), so that the temperature of the heated preform does not drop before the start of a biaxial stretching step. The progress of crystallization of the crystalline polyester within the preform, derived from gradual cooling of the preform, can be arrested thereby.

The heated preform set in the blow mold 108 is then stretched, in the longitudinal direction, using a stretching rod 109. This stretching is referred to as primary stretching. Preferably, a gas is allowed to flow in that case in such a manner that the preform 104 does not come into contact with the stretching rod 109; the pressure of the gas is referred to herein as a primary blow pressure.

After primary stretching, a gas 110 is introduced through a preform opening 106, to inflate the preform in the transversal direction (circumferential direction). This is referred to as secondary stretching. The pressure of the gas is referred to herein as a secondary blow pressure. Examples of the gas that is blown in include air, nitrogen, carbon dioxide and argon.

As a result of these primary stretching and secondary stretching, the preform 104 expands in the directions denoted by the arrows 301, comes into close contact with the inner wall of the blow mold 108, and in that state, solidifies through cooling, to yield a blow-molded article 112. Preferably, the molding step has a step of stretching the preform in a longitudinal direction of the preform by using a stretching rod, and a step of stretching the preform in the circumferential direction of the preform by causing a gas to flow into the preform having been stretched in the longitudinal direction.

The blow-molded article 112 is then retrieved, from the blow mold 108, by separating the left die 108-1 and the right die 108-2 of the blow mold 108. The blow-molded article 112 is stretched both longitudinally and transversally, and hence is a high-strength molded article.

As described above, in the stretching step by injection stretch blow molding the preform is preferably in an uncrystallized state (non-crystalline state, i.e. amorphous state). A high-strength bottle can be formed through stretch crystallization of PET, in the direction of stretching by blowing, i.e. biaxial stretch molding, upon reaching of a blow molding temperature in an amorphous state.

Injection stretch blow molding methods include a single-stage method and a two-stage method. The single-stage method is a method in which residual heat from the preform immediately after retrieval from the mold is exploited to carry out stretch blow molding, as-is or with temperature control. The two-stage method is a method in which the preform is cooled down to room temperature, after which the temperature of the preform is adjusted again, whereupon stretch blow molding is carried out.

In the single-stage method as illustrated in FIG. 9, after the preform 104 has been injection molded out of the injection molding machine 101, cooling ends quickly, within 10 or fewer seconds, at the time of injection molding, so as to prevent that the preform 104 should drop to or below the glass transition temperature of PET. The preform 104 is then kept right away at the blow molding temperature (for instance at a temperature of 90°C to 120°C), is heated, and is blow-molded, to yield a blow bottle 112. An integrated apparatus combining an injection molding apparatus and a blow molding apparatus is used herein.

The two-stage method is a blow molding method in which the preform after injection molding is cooled down to or below the glass transition temperature of PET, is retrieved, and is thereafter heated at the blow molding temperature (for instance from 90°C to 120°C) in another blow molding apparatus. Herein an injection molding apparatus and a blow molding apparatus are used in the form of separate equipment. For instance, once the preform has been molded in the step of preparing the preform, the preform is then cooled down to or below the glass transition temperature of the first polyester, and the molding step is carried out thereafter.

The single-stage method is preferred in that less reheating energy is required herein than in the two-stage method, since the preform is not cooled down to or below the glass transition temperature. However, the lapse of time of holding at the crystallization temperature of PET after injection molding is longer, and as a result crystallization of isothermal crystals of PET progresses more readily than in the two-stage method. The crystallization temperature of this PET is from about 130°C to 200°C.

Therefore, the production method of the present disclosure elicits the effect of slowing down the progress of isothermal crystallization, both in a single-stage method and in a two-stage method; however, the production method of the present disclosure is particularly effective in a single-stage method. Preferably, thus, after molding of the preform in the step of preparing the preform there is carried out the molding step so that the preform does not drop down to or below the glass transition temperature of the first polyester.

The manner in which the characteristics of a biaxially-stretched blow-molded article vary is difficult to ascertain in biaxial stretching, but can be ascertained in uniaxial stretching.

FIG. 4 illustrates how PET characteristic change as a result of uniaxial stretching.

An explanation follows next on a method for measuring PET characteristics by uniaxial stretching.

Firstly, PET is molded into a sample shape (Charpy specimen d in FIG. 5) pursuant to JIS K7111, using an injection molding apparatus, to yield an unstretched molded article. As illustrated in FIG. 5, notches (cuts) are made in the center of the Charpy specimen, by cutting from two directions (e direction and f direction) using a notching machine (not shown). The specimen is notched down to a distance g of 2.00 mm between the deepest point of the notch that is cut in the e direction and the deepest point of the notch that is cut in the f direction. The angle $\theta$ of the notches is set to 45°.

The shaved Charpy specimen (test piece) is heated using a heat gun until the specimen reaches a blow temperature (100°C in the present disclosure). Herein non-stretched portions, i.e. between the portion notched by the notching machine and the portions chucked by the tensile tester, are protected for instance with a heat insulating sponge so as to preclude rises in temperature. Preferably, the time required to reach 100°C in the heat gun is 90 or fewer seconds.

At the point in time at which the temperature of the portion to be stretched reaches 100°C, a tensile test is carried out at a rate of 500 mm/min using a tensile tester (Instron 5582; by Illinois Tool Works Inc.) in accordance with JIS K7161, to generate a strain-stress curve, i.e. an S-S curve. Preferably, when a test piece is obtained by using a sample in the form of pellets used for stretching and S-S curve is outputted by the tensile tester, stress when a stretching ratio is 5 times is 2.00 to 15.00 MPa as read from the S-S curve.

Biaxial stretch blow molding of the preform can be carried out more easily by setting thus stress when a stretching ratio is 5 times to lie within the above range. A toner bottle can be more easily obtained as a result in which stretch crystallization has proceeded uniformly, and which boasts excellent strength.

As a concrete example, FIG. 6 illustrates S-S curves of the following PET samples a to c.

- Sample a:

Amorphous sample made up of 100% PET (product name: TN-8550FF; by Teijin Limited, IV value = 0.77 dL/g)

- Sample b:

| | |
|---|---|
| PET (product name: TN-8550FF; by Teijin Limited) | 98.6% |
| Masterbatch of the above PET, containing 5 mass% of carbon black | 1.4% |

Sample having a degree of crystallinity of 4%, and obtained by injecting pellets, in turn obtained by melt-kneading of above PET and masterbatch, into an injection mold set to a mold temperature of 25°C.

- Sample c:

| | |
|---|---|
| PET (product name: TN-8550FF; by Teijin Limited) | 98.6% |
| Masterbatch of the above PET, containing 5 mass% of carbon black | 1.4% |

Sample having a degree of crystallinity of 18%, and obtained by injecting pellets, in turn obtained by melt-kneading of above PET and masterbatch, into an injection mold set to a mold temperature of 60°C.

As illustrated in FIG. 6, Sample a in an amorphous state exhibits low strain, i.e. a stress of 2.6 MPa at the time where the stretching ratio reaches 5 after the start of stretching. The stretch factor at a time where stretching is discontinued is very large, of 20 or higher. This state corresponds to stress with easy stretching of the sample by means of a stretching rod at the time of longitudinal stretching using the stretching rod, such that the sample inflates without rupturing, also in blow molding.

Sample b exhibits a stress of 9.7 MPa at the time where the stretching ratio reaches 5 after the start of stretching, i.e. exhibits higher stress than that of an amorphous sample. The stretch factor upon discontinuation of stretching is 16, which is lower than that of sample a. This is because PET spherulites having carbon black nuclei occurred in sample b, and the hardness of the sample increased, as a result of which a stronger force was required in order to stretch the sample.

Sample c was hard even at a temperature of 100°C, and hence the stress at the time where the stretching ratio reached 5 after the start of stretching was 19.6 MPa. The stretching ratio decreased sharply once it exceeded 10. In consequence, as illustrated in FIG. 7, biaxial stretch blow molding of the preform could not be carried out, in that the stretching rod 109 broke the preform 104, in an attempt to carry out stretch blow molding, through heating at a temperature of 100°C, of a preform having been produced so as to exhibit the same crystallized state as that of Sample c.

A strong correlation exists between the crystallization state of PET and stretch blow moldability, and thus it is considered that the above-described measurement of stress at the time of uniaxial stretching at a temperature of 100°C is suitable for determining whether biaxial stretch blow molding was possible or not. In the present disclosure, examples and comparative examples were carried out relying on the above method in order to not only ascertain whether blow molding is possible, but also to quantify the actual crystallization state.

Image Forming Apparatus

An image forming apparatus will be explained below next with reference to accompanying drawings. FIG. 1 is a schematic configuration explanatory diagram illustrating an electrophotographic four-color image forming apparatus where the reference symbol 80 denotes the main body of the image forming apparatus. The image forming apparatus 80 is configured as an image forming apparatus of so-called intermediate transfer tandem type in which four color image forming sections are arranged side by side on an intermediate transfer belt.

The image forming apparatus 80 carries out image formation as follows. In the image forming apparatus 80, respective electrostatic latent images are formed first on photosensitive drums 17 (17y, 17m, 17c, 17bk) by exposure devices 50 (50y, 50m, 50c, 50bk) on the basis of print data. In the image forming apparatus 80 the formed electrostatic latent images are developed by respective developing apparatuses 21 (21y, 21m, 21c, 21bk), to form respective toner images.

In the image forming apparatus 80, the toner images are transferred onto an intermediate transfer body 62 by primary transfer devices 60 (60y, 60m, 60c, 60bk), whereupon a resulting toner image is transferred, in a secondary transfer section 64 (64a, 64b), onto a sheet material S that is supplied from a paper feeding device 63. In the image forming apparatus 80, the toner image transferred onto the sheet S is fixed on the sheet material S by a fixing means 68, followed by discharge onto a paper discharge tray 70.

In the image forming apparatus 80, where toner images are formed by the developing apparatuses 21, detachable toner bottles 3 (3Y, 3M, 3C, 3Bk) are used for the purpose of supplying respective toners to the developing apparatuses 21. The toner bottle of the present disclosure is used thus in the above manner.

## Examples

The present disclosure will be described in detail next on the basis of examples and comparative examples. However, the present disclosure is not limited to these examples.
The following items were measured and evaluated in the examples and comparative examples.

## Production of a Toner Bottle

A toner bottle 3 (total length 439.5 mm, diameter 101 mm) illustrated in FIG. 10 was produced using a single-stage blow molding apparatus (ASB-70DPH by Nissei ASB Machine Co., Ltd.). The blow stretching ratio was set to "longitudinal stretch factor × transversal stretch factor = 6.7".
The "longitudinal stretch factor" of the blow stretching ratio is a value calculated by dividing the "total length after stretching" by the "total length (before stretching) of the portion of the preform (heated portion) that reaches the stretching temperature".
The "transversal stretch factor" of the blow stretching ratio is a value calculated by dividing the "diameter of the intermediate portions after stretching" by the "diameter (before stretching) of the intermediate portion of the preform".
Firstly the materials given in Table 1 below were melt-kneaded and pelletized, to produce to Masterbatch 1 having a carbon black concentration of 5 mass%.

[Table 1]

| Material | Mixing ratio |
|---|---|
| Carbon black (product name: MA-100; by Mitsubishi Chemical Corporation) | 5 mass% |
| PET resin 1 (product name: TRN-8550FF; by Teijin Limited) | 95 mass% |

Next, Masterbatch 1 having a carbon black concentration of 5 mass%, prepared above, and PET, were mixed in the proportions given in Table 2 below, and were melt-kneaded and subsequently pelletized, to yield pellets of the resin mixture. The obtained pellets were dried at a temperature of 150°C for 5 hours. A sample for the above tensile test was prepared using these pellets, the tensile test was carried out, an S-S curve was created, and stress when a stretching ratio was 5 times was calculated. The result was 9.85 MPa.

[Table 2]

| Material | Mixing ratio |
|---|---|
| Masterbatch 1 with 5 mass% carbon black concentration | 1.4 mass% |
| PET resin 1 (product name: TRN-8550FF; by Teijin Limited, IV value = 0.77 dL/g) | 98.6 mass% |

## Blow Molding Conditions

Pellets of the resin mixture dried as described above were charged into an injection molding apparatus of a one-step stretch blow molding machine (product name: ASB-70DPH; by Nissei ASB Machine Co., Ltd.), and biaxial stretch blow molding was carried out, to mold a toner bottle. The above one-step stretch blow molding machine sequentially executes a step of obtaining a test tube-shaped preform by injection molding, and a step of subjecting the preform to biaxial stretch blow molding, to yield a bottle-shaped molded article (single-stage method). The screw diameter of the injection molding machine in the molding machine was 54 mm.
As a preform molding mold there was prepared first a mold capable of molding a preform having an outer diameter of 30 mm, a wall thickness of 3.7 mm, and a length of 220 mm. A preform was then molded under the following molding conditions.

- Screw diameter: 54 mm
- Screw position prior to filling of resin mixture into cavity: 95 mm
- Injection speed

  Up to 5 mm of screw advance: 50% of maximum speed
  Up to 20 mm of further screw advance: 30% of maximum speed
  Up to 35 mm of further screw advance: 25% of maximum speed

PV switch position: 35 mm

- Injection pressure
    - Up to PV switch: 12.0 MPa
    - After PV switch: 4.5 MPa (pressure holding)
- Pressure holding time after PV switch
    - 4.57 seconds
- Heating cylinder temperature: 280°C
- Cooling time: 8.0 seconds
- Mold temperature: 18°C

Once a cooling time of 8.0 seconds had elapsed, the preform was thereafter demolded and was conveyed to a biaxial stretch blow station of the one-step stretch blow molding machine. The temperature of the preform during conveyance was controlled as follows.

- Preform heating temperature

10% of the total length of the preform from the top thereof: 180°C
25% of the total length of the preform from the top thereof: 200°C
50% of the total length of the preform from the top thereof: 200°C
75% of the total length of the preform from the top thereof: 180°C

The preform adjusted to the above temperature was set in a cylindrical mold having a size corresponding to the size of the toner bottle and having been adjusted to a temperature of 18°C, and biaxial stretch blow molding was carried out thereupon, to produce a blow bottle. The preform being transported was heated, whereby the surface temperature of the center of the preform immediately prior to entering the cylindrical mold was 100°C.

Firstly, the stretching rod was inserted from a retracted position into the preform, through the opening of the preform, and was driven forward until coming into contact with the apex of the preform. The air pressure for driving the stretching rod was set to 1.2 MPa, whereupon the stretching rod was further driven forward. Next, primary air was introduced into the preform through the opening thereof 0.5 seconds after the start of this further advancement of the stretching rod. The pressure of the primary air was set to 1.0 MPa. Secondary air was subsequently introduced 0.15 seconds after the introduction of the primary air. The pressure of the secondary air was set to 2.9 MPa. Air was introduced into the preform over 7.0 seconds, from the start of introduction of primary air. The pressure inside the preform was then reverted to normal pressure over 2.5 seconds. A toner bottle produced by blow molding was thus obtained. This bottle is a toner bottle of unrecycled virgin PET.

Example 1

Production of Recycled Pellets

Toner was sealed in toner bottles of virgin PET (material formulation given in Table 2), the bottles were then used as electrophotographic toner bottles (NPG-67 by Canon Inc.) in the market, and thereafter the bottles were recovered from the market. Two hundred recovered toner bottles were prepared herein. The toner bottles were cleaned using an air gun, but a small amount of toner remained therein.

The bottles with such residual toner were crushed using a crusher, to a size of about 5 to 10 mm square, to yield a crushed product (hereafter also referred to as flake product). The flakes were washed with water, to thereby yield Flakes (1) having toner removed therefrom. The Flakes (1) were mixed with 0.1 mass% of the Polyester (1) described above (with 100 mass% as the total of Flakes (1) plus Polyester (1)), and then the resulting mixture was melt-kneaded using a twin-screw extruder (PC-46 by Ikegai Co., Ltd.) at a temperature of 260°C, a screw rotational speed of 200 rpm, at vent degassing of -0.08 MPa, and at a discharge rate of 50 kg/h, followed by pelletization. The resulting pellets were kept at a temperature of 150°C for 5 hours, to elicit crystallization of pellets for molding.

Crystallization in this case is not short-time crystallization that sometimes occurs in blow molding, but entails a step of crystallization over a prolonged period of time; even if the mixture contains Polyester (1), in which crystallization is hindered, crystallization nevertheless proceeds over a long period of time. Herein the MR-PET containing this crystallized Polyester (1) will be referred to as MR-PET (1). The IV value of MR-PET (1) was 0.72 dL/g. The IV value of the MR-PET (1) was lower than that of virgin PET (0.77 dL/g), and accordingly it was found that the molecular chains of MR-PET (1) had been shortened on account of recycling.

The method for measuring the IV value was as follows.

Method compliant with JIS K 7390-2003
Measuring device: thermostatic bath for kinematic viscosity measurement TV-5S (by Thomas Scientific Instruments Co., Ltd.)
Mixed solvent: phenol/1,1,2,2,-tetrachloroethane = 60/40 (mass ratio)
Viscometer: Ubbelohde viscometer (No. 1C)
Solution viscosity: 0.4 g/dL
Measurement temperature: (30±0.05)°C
Pre-drying: 120°C, 1 hour

Procedure:

(1) herein 0.2 g of a dried sample and 50 mL of a mixed solvent were added into a 100 mL Erlenmeyer flask, and the whole was completely melted at 100°C for 30 minutes while under stirring.
(2) The sample was then allowed to cool down to room temperature, and was injected into the viscometer.
(3) The sample was allowed to stand in a constant-temperature water bath at 30°C for 20 minutes or longer, and the measurement was performed.
(4) Then IV was calculated using on the basis of the expression below.

$$IV = \frac{-1 + \sqrt{1 + 4 \times \kappa \times \eta_{sp}}}{2 \times \kappa \times C}$$

IV: IV value (dL/g)
$\eta$sp: specific viscosity (t1/t0-1)
t0: flow time of mixed solvent (seconds)
t1: flow time of sample solution (seconds)
$\kappa$: unique coefficient of PET (=0.3083)
C: concentration of sample solution (g/dL)
Procedure in a Measurement from a Stretch Blow-Molded Article

Also in the case of a stretch blow-molded article, the molded article is crushed using a crusher, whereupon the IV value can measured in accordance with a method similar to the above method, using the crushed sample.

Production of a Blow Bottle

Biaxial stretch blow molding was carried out, using MR-PET (1), in the one-step stretch blow molding machine described above, and under the same blow molding conditions as described above. A blow bottle could be molded as a result, without rupture of the preform halfway during molding. Visual observation of the obtained blow bottle revealed no strain derived from formation of PET spherulites.

The underlying reason for this is deemed to be the inhibition of crystallization elicited by the Polyester (1), such that the preform did not crystallize even though molecular weight had been reduced with a reduced molecular weight.

Measurement of an S-S Curve

A sample for the above tensile test was prepared using the MR-PET (1) pellets, the tensile test was carried out, an S-S curve was created, and stress when a stretching ratio was 5 times was calculated. The result was 9.87 MPa (15.00 MPa or less).

Example 2

Production of Recycled Pellets

Herein there were prepared 200 toner bottles similar to those in Example 1. The toner bottles were cleaned using an air gun, but a small amount of toner remained therein. The residual amount of toner, which was herein the average value of the 200 bottles, was 0.321 mass% relative to 100% as the mass of the toner bottle body (PET toner bottle having had removed therefrom for instance all supply parts ancillary to the bottle, such that only toner remains in the interior of the bottle). This toner contains 30 mass% of Polyester (1) relative to 100 mass% of the toner, and hence the substantial content of Polyester (1) is 0.096 mass%.

The bottles having residual toner therein were crushed using a crusher, down to a size of about 5 to 10 mm square, to yield a crushed product. This product is referred to as Flakes (2). The Flakes (2) were melt-kneaded, without having been washed, using a twin-screw extruder (PC-46 by Ikegai Co., Ltd.) at a temperature of 260°C, a screw rotational speed of 200 rpm, and at a discharge rate of 50 kg/h, followed by pelletization. The resulting pellets were kept at a temperature of 150°C for 5 hours, to elicit crystallization of pellets for molding. These pellets constituted MR-PET (2) pellets. The IV value of MR-PET (2) was 0.72 dL/g. The IV value of the MR-PET (2) was lower than the initial IV value (0.77 dL/g), and accordingly it was found that the molecular chains of MR-PET (2) had been shortened on account of recycling.

Production of a Blow Bottle

Biaxial stretch blow molding was carried out, using MR-PET (2), in the one-step stretch blow molding machine described above, and under the same blow molding conditions as described above. A blow bottle could be molded as a result without rupture of the preform halfway during molding. Visual observation of the obtained blow bottle revealed no strain derived from formation of PET spherulites.

The underlying reason for this is deemed to be the inhibition of crystallization elicited by the Polyester (1), such that the preform did not crystallize even though molecular weight had been reduced.

Measurement of an S-S Curve

A sample for the above tensile test was prepared using the MR-PET (2) pellets, the tensile test was carried out, an S-S curve was created, and stress when a stretching ratio was 5 times was calculated. The result was 11.58 MPa (15.00 MPa or less).

Examples 3 and 4

Herein, in Example 1, pellets of MR-PET (3) in Example 3 and of MR-PET (4) in Example 4 were prepared in the same way as those of MR-PET (1) but modifying herein the mixing ratios of Flakes (1) and Polyester (1) as given in Table 6. Respective blow bottles were produced in the same way as in Example 1 but using herein these pellets. Respective blow bottles could be molded as a result without rupturing of the preforms halfway during molding. Visual observation of the obtained blow bottles revealed no strain derived from formation of PET spherulites.

Stress when a stretching ratio was 5 times was calculated in the same way as in Example 1 but using herein pellets of MR-PET (3) and MR-PET (4). The results were all equal to or smaller than 15.00 MPa. Stress values are given in Table 7.

Example 5

Pellets of MR-PET (5) were obtained in the same manner as the pellets of MR-PET (1), but modifying herein vent degassing to -0.01 MPa, and modifying the amount of Polyester (1) to 1.0 mass%. The IV value of MR-PET (5) was 0.60 dL/g. It is deemed that the IV value of PET was lower herein due to the fact that vent degassing was lower than in MR-PET (1), and due to hydrolysis by residual moisture in the flakes.

A blow bottle was produced in the same way as in Example 1 but using herein these pellets. A blow bottle could be molded as a result without rupturing of the preform halfway during molding. Visual observation of the obtained blow bottle revealed no strain derived from formation of PET spherulites.

Stress when a stretching ratio was 5 times was calculated in the same way as in Example 1 but using herein pellets of MR-PET (5). The result was 13.88 MPa (15.00 MPa or less).

Example 6

PET Resin

Product name: TRN-RTJ (by Teijin Limited) having an IV value of 0.64 dL/g (referred to as PET resin 2) was used herein.

Production of a Toner Masterbatch

[Table 3]

| Material | Mixing ratio |
|---|---|
| Toner (product name: NPG-67 toner by Canon Inc.) | 10 mass% |
| PET resin 1 (product name: TRN-8550FF; by Teijin Limited) | 90 mass% |

The materials given in Table 3 were melt-kneaded and then pelletized, to prepare Toner masterbatch 2 having a toner concentration of 10 mass%.

Production of a Blow Bottle

[Table 4]

| Material | Mixing ratio (mass%) |
|---|---|
| Masterbatch 1 with 5 mass% carbon black concentration | 1.40% |
| Masterbatch 2 with 10 mass% toner concentration | 5.00% (with Polyester (1) content of 0.15%) |
| PET resin 2 (product name: TRN-RTJ, by Teijin Limited, IV value = 0.64 dL/g) | 93.60% |

A blow bottle was produced in the same way as in Example 1 but with the material formulation given in Table 4. A blow bottle could be molded as a result without rupturing of the preform halfway during molding. Visual observation of the obtained blow bottle revealed no strain derived from formation of PET spherulites.

The stress when a stretching ratio was 5 times was calculated for the pellets of Example 6 in the same way as in Example 1. The result was 15.00 MPa or less, specifically 14.56 MPa.

Comparative Example 1

Herein MR-PET was produced in the same way as in Example 1 but modifying Polyester (1) in Example 1 to 0.00 mass%. This will be referred to as MR-PET (6). A blow bottle was produced using this MR-PET (6). The IV value in this case was 0.72 dL/g. However, the preform ruptured while being stretched uniaxially by the stretching rod, and blow molding could not be carried out.

Stress when a stretching ratio was 5 times was calculated in the same way as in Example 1 but using herein MR-PET (6). The result was 19.55 MPa, which was higher than 15.00 MPa, since no measures were taken herein to prevent crystallization arising from a lowered molecular weight. Crystallization was thus found to have been progressing.

Comparative Example 2

MR-PET was produced in the same way as in Example 5, but herein the amount of Polyester (1) was modified to 0.00 mass%. This will be referred to as MR-PET (7). A blow bottle was produced using this MR-PET (7). The IV value in this case was 0.60 dL/g. However, the preform ruptured while being stretched uniaxially by the stretching rod, and blow molding could not be carried out.

Stress when a stretching ratio was 5 times was calculated in the same way as in Example 1 but using herein MR-PET (7). The result was 25.68 MPa. This is deemed to arise from crystallization advancing further than in Comparative example 1, since molecular weight is further reduced than in Comparative example 1.

Comparative Example 3

[Table 5]

| Material | Mixing ratio (mass%) |
|---|---|
| Masterbatch 1 with 5 mass% carbon black concentration | 1.40% |
| PET resin 2 (product name: TRN-RTJ; by Teijin Limited, IV value = 0.64 dL/g) | 98.60% |

A blow bottle was produced in the same way as in Example 1 but adopting herein the material formulation given in Table 5. As a result, the preform ruptured while being stretched uniaxially by the stretching rod, and blow molding could not be carried out. Visual observation of the obtained blow bottle revealed no strain derived from formation of PET spherulites.

The stress when a stretching ratio was 5 times was calculated for the pellets of Comparative example 3 in the same way as in Example 1. The result was 23.68 MPa. It is deemed that when the IV value is low and the preform contains carbon black, the preform cannot be stretched, and ruptures even if not made of a recycled material.

Table 6 sets out the material formulations of Examples 1 to 5 and Comparative examples 1 and 2.

[Table 6]

| | Material composition (mass%) | | | Vent degassing conditions |
|---|---|---|---|---|
| | Flakes (1) | Flakes (2) | Polyester (1) | |
| Example 1 | 99.9% | | 0.1% | -0.08MPa |
| Example 2 | | 100% (with toner content of 0.321 %) | | -0.08MPa |
| Example 3 | 99.0% | | 1.0% | -0.08MPa |
| Example 4 | 99.99% | | 0.01% | -0.08MPa |
| Example 5 | 99.0% | | 1.0% | -0.01 MPa |
| Comparative example 1 | 100% | | | -0.08MPa |
| Comparative example 2 | 100% | | | -0.01 MPa |

Table 7 sets out the results of Examples 1 to 5 and Comparative examples 1 and 2.

[Table 7]

| | MR-PET name | IV value (dL/g) | Stress when a stretching ratio is 5 times | Blow bottle molding |
|---|---|---|---|---|
| Example 1 | MR-PET(1) | 0.72 | 9.87MPa | Possible |
| Example 2 | MR-PET(2) | 0.72 | 11.58MPa | Possible |
| Example 3 | MR-PET(3) | 0.72 | 8.54MPa | Possible |
| Example 4 | MR-PET(4) | 0.72 | 14.92MPa | Possible |
| Example 5 | MR-PET(5) | 0.60 | 13.88MPa | Possible |
| Comparative example 1 | MR-PET(6) | 0.72 | 19.55MPa | Not possible |
| Comparative example 2 | MR-PET(7) | 0.60 | 25.68MPa | Not possible |

Intrinsic viscosity IV values of the blow bottles of Examples 1 to 6 and Comparative Examples 1 to 3 were measured in accordance with the above-described method; the values were identical to those measured from the pellets.

While the present invention has been described with reference to exemplary embodiments, it is to be understood that the invention is not limited to the disclosed exemplary embodiments. The scope of the following claims is to be

accorded the broadest interpretation so as to encompass all such modifications and equivalent structures and functions. A stretch blow-molded article comprising: a first polyester; and a second polyester having a structure different from a structure of the first polyester, wherein an intrinsic viscosity value of the first polyester is 0.60 to 0.74 dL/g, and the second polyester has a structure corresponding to terephthalic acid and a structure corresponding to bisphenol A.

## Claims

1. A stretch blow-molded article comprising: a first polyester; and a second polyester having a structure different from a structure of the first polyester, wherein

   an intrinsic viscosity value of the first polyester is 0.60 to 0.74 dL/g, and
   the second polyester has a structure corresponding to terephthalic acid and a structure corresponding to bisphenol A.

2. The stretch blow-molded article according to claim 1, wherein the first polyester comprises at least one selected from the group consisting of polyethylene terephthalate and polyethylene naphthalate.

3. The stretch blow-molded article according to claim 1 or 2, wherein a content of the second polyester is 0.005 to 1.00 mass%, relative to a total of the first polyester and the second polyester.

4. The stretch blow-molded article according to any one of claims 1 to 3, wherein the first polyester is recycled polyester.

5. The stretch blow-molded article according to any one of claims 1 to 4, wherein the stretch blow-molded article is a toner bottle.

6. The stretch blow-molded article according to any one of claims 1 to 5, wherein the stretch blow-molded article comprises carbon black.

7. A method for producing the stretch blow-molded article according to any one of claims 1 to 6, the method comprising:

   a step of preparing a preform comprising the first polyester and the second polyester; and
   a molding step of obtaining the stretch blow-molded article through stretch blow molding of the preform.

8. The method for producing the stretch blow-molded article according to claim 7, wherein

   the preform has a test tube shape, and
   the molding step has:

      a step of stretching the preform in a longitudinal direction of the preform by using a stretching rod; and
      a step of stretching the preform in a circumferential direction of the preform by causing a gas to flow into the preform having been stretched in the longitudinal direction.

9. The method for producing the stretch blow-molded article according to claim 7, wherein

   the step of preparing the preform has:

      a step of forming pellets through crushing and melt kneading a recycled toner bottle having an electrophotographic toner adhered thereto; and
      a step of forming the preform out of the formed pellets, and

   the electrophotographic toner comprises the second polyester, and
   the toner bottle comprises the first polyester.

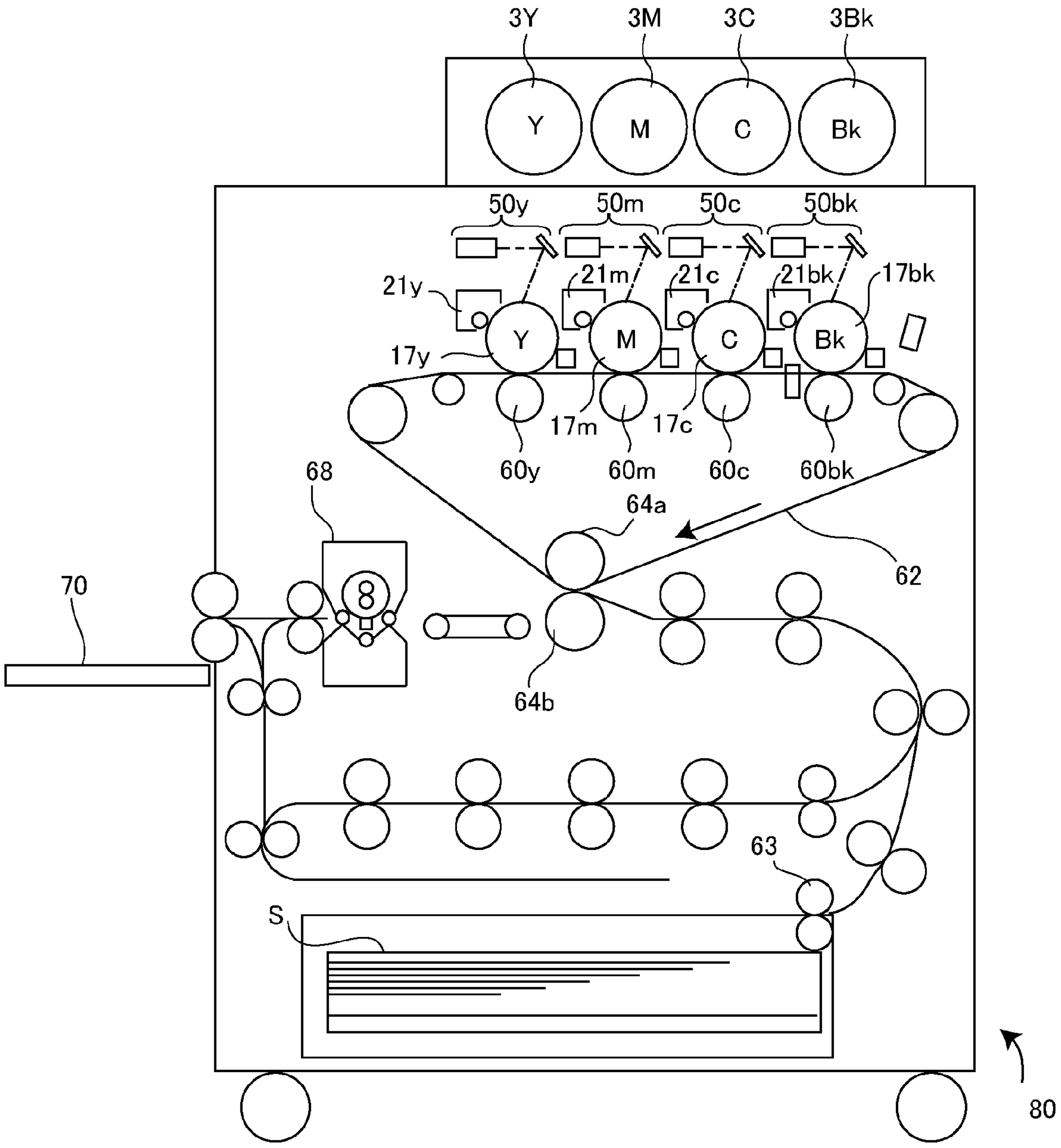
3Y
3M
3C
3Bk
Y
M
C
Bk
50y
50m
50c
50bk
21y
21m
21c
21bk
17bk
17y
17m
17c
60y
60m
60c
60bk
68
64a
62
70
64b
63
S
80

FIG. 1

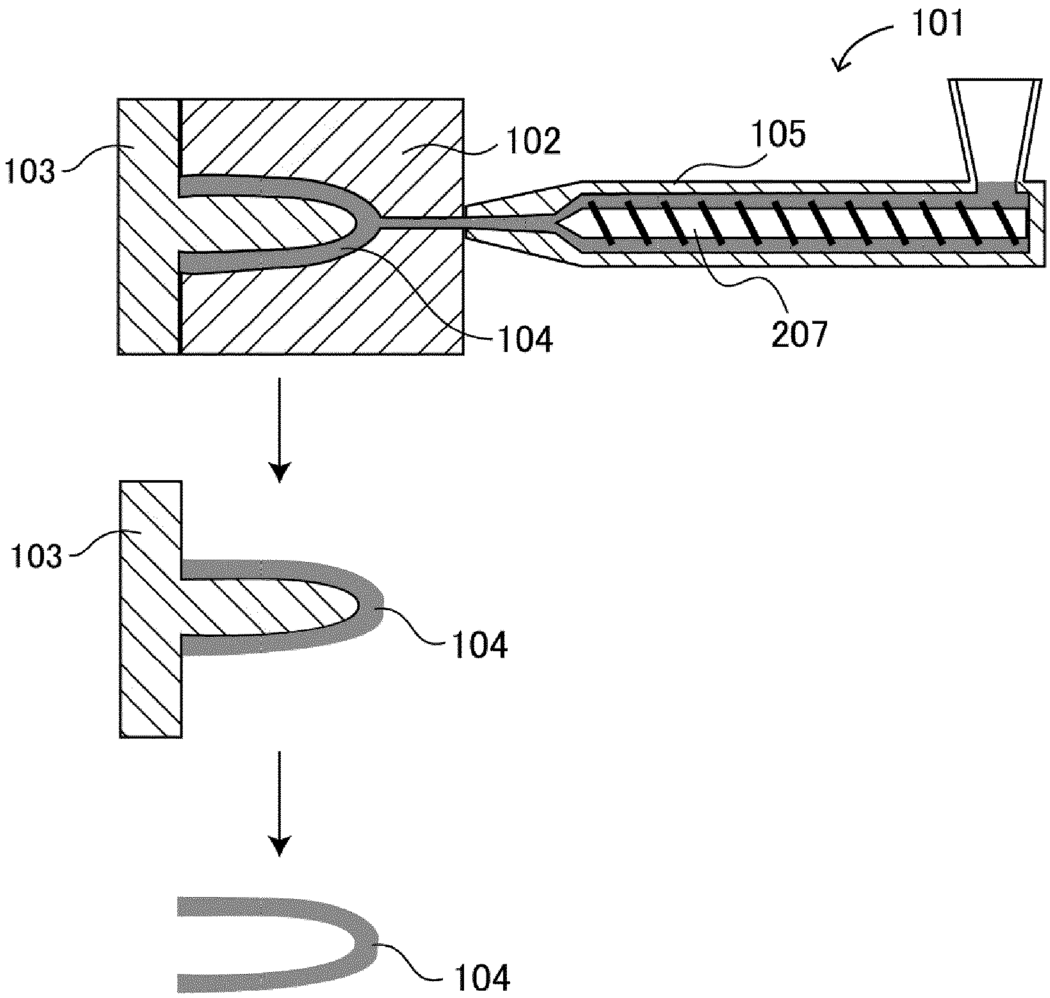
101
102
103
105
104
207
103
104
104

FIG. 2

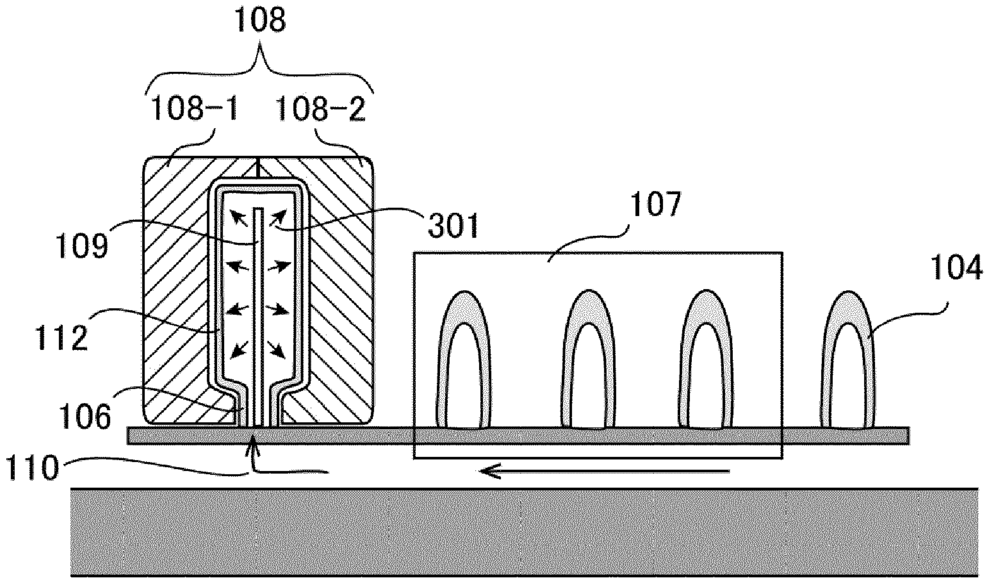
108
108-1
108-2
109
301
107
104
112
106
110

FIG. 3

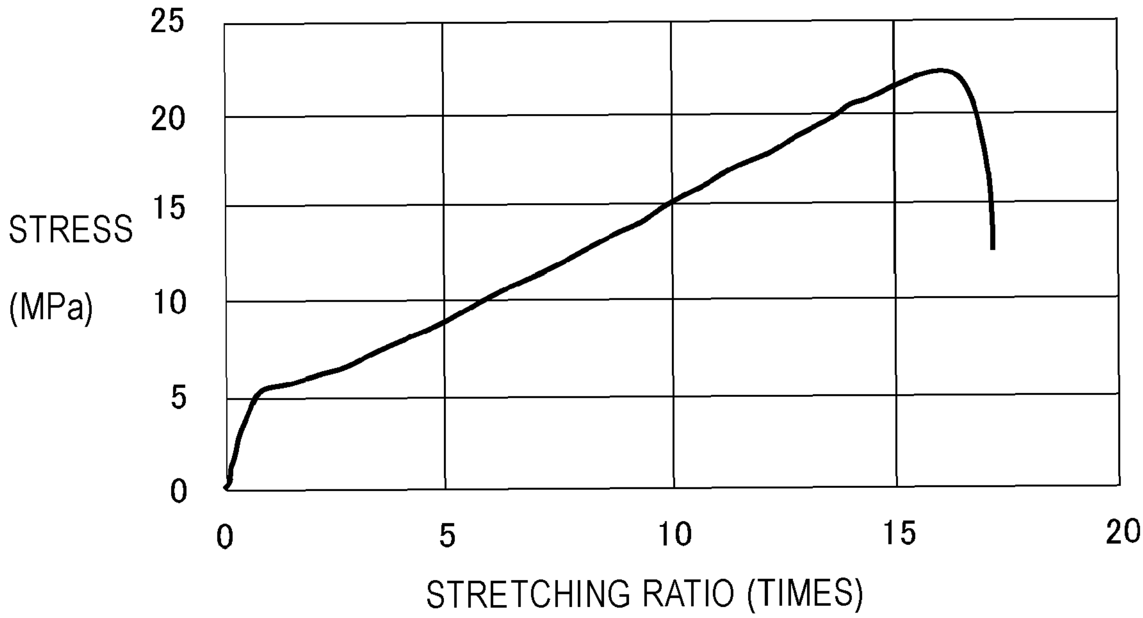
25
20
15
10
5
0
STRESS
(MPa)
0
5
10
15
20
STRETCHING RATIO (TIMES)

FIG. 4

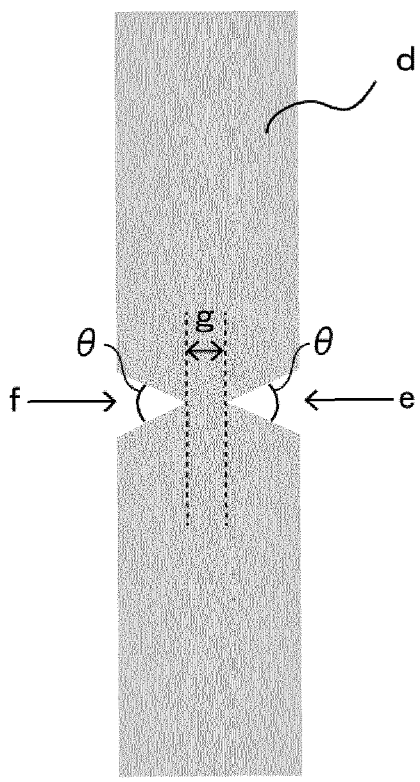
d
g
θ
θ
f
e

FIG. 5

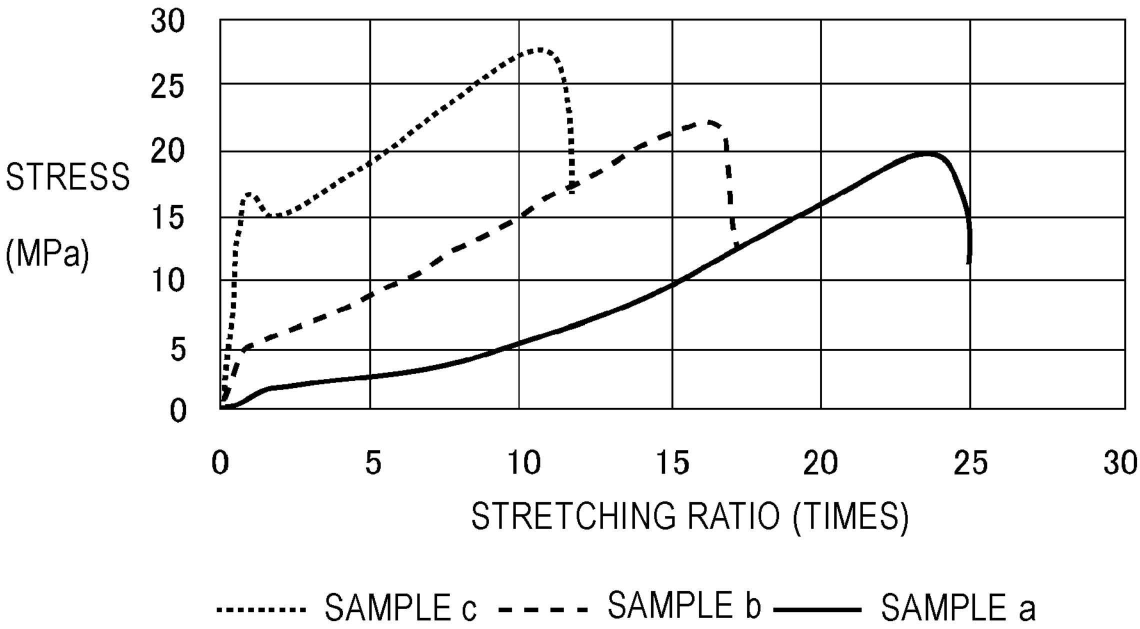

30
25
20
15
10
5
0
STRESS
(MPa)
0
5
10
15
20
25
30
STRETCHING RATIO (TIMES)
SAMPLE c
SAMPLE b
SAMPLE a


FIG. 6

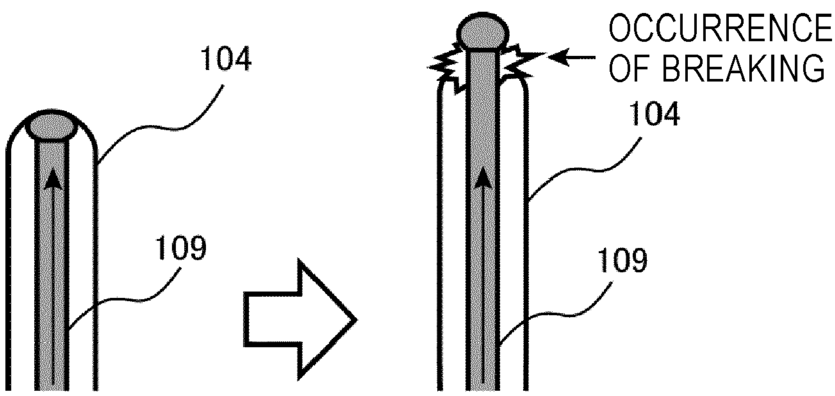

104
109
OCCURRENCE
OF BREAKING
104
109


FIG. 7

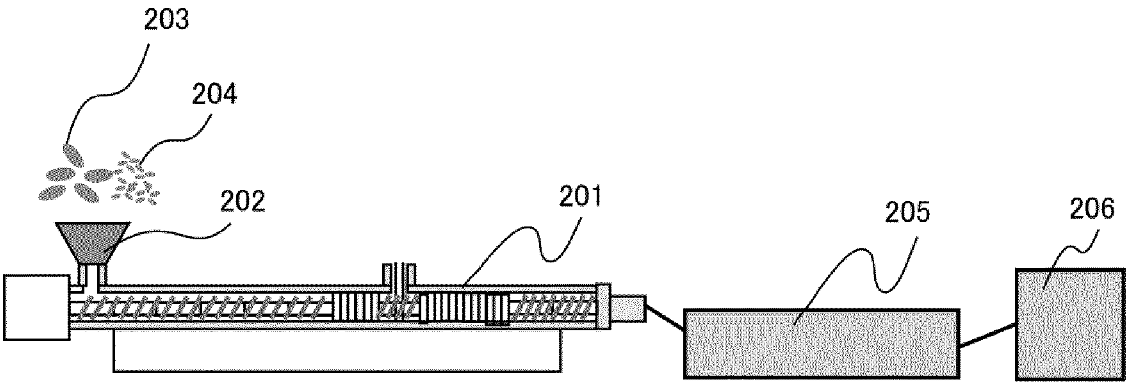


FIG. 8

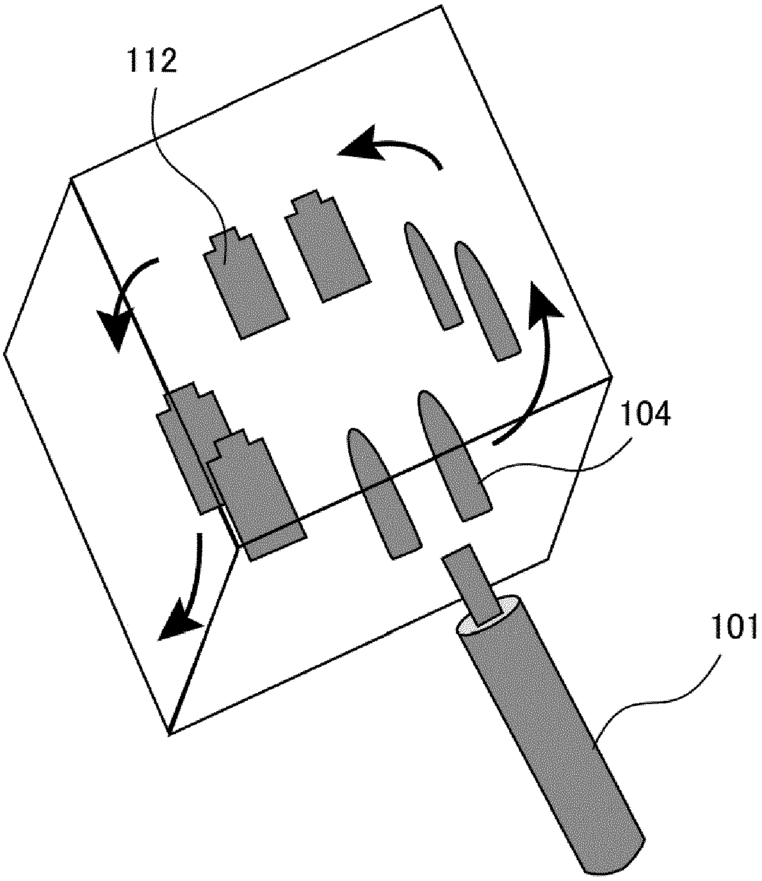


FIG. 9

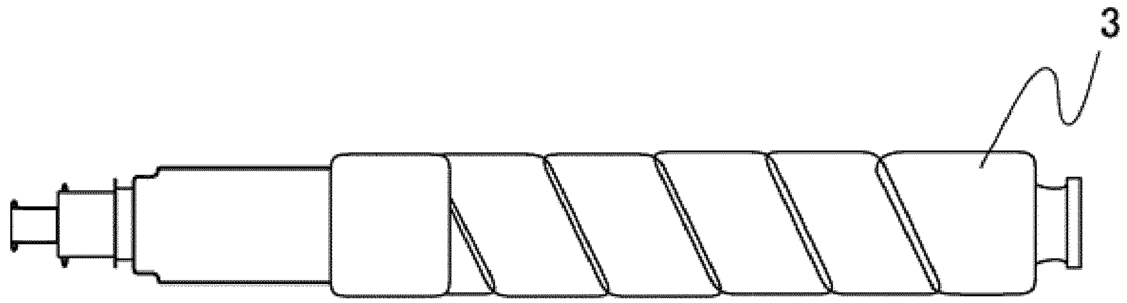


FIG. 10

Europäisches Patentamt
European Patent Office
Office européen des brevets

# EUROPEAN SEARCH REPORT

Application Number
EP 24 16 1340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 136583 A (TOYO SEIKAN KAISHA LTD) 14 May 2003 (2003-05-14) * paragraphs [0001], [0032], [0033], [0029], [0031], [0034], [0055], [0091] - [0094]; figure 2 * | 1-9 | INV. B29B17/00 |
| X | EP 0 926 197 A1 (MITSUBISHI PLASTICS INC [JP]) 30 June 1999 (1999-06-30) | 1-3,5-8 | |
| A | * paragraphs [0002], [0029], [0032], [0034], [0071]; claims 18,1; figure 4 * | 4,9 | |
| X | JP H09 272792 A (UNITIKA LTD; NIPPON ESTER CO LTD) 21 October 1997 (1997-10-21) | 1-3,5-8 | |
| A | * paragraphs [0036], [0012]; claim 1 * | 4,9 | |
| A | US 5 888 598 A (BREWSTER GARY [US] ET AL) 30 March 1999 (1999-03-30) * claim 1 * | 1-9 | |
| A | US 9 890 256 B2 (ADEKA CORP [JP]) 13 February 2018 (2018-02-13) * column 1, line 29 * | 1-9 | TECHNICAL FIELDS SEARCHED (IPC) |
| A | JP 2010 139697 A (CANON KK) 24 June 2010 (2010-06-24) * paragraphs [0061], [0145], [0234] * | 1-9 | B29C B29B B29K C08L B29L |
| A | JP 2011 256328 A (TOYO SEIKAN KAISHA LTD) 22 December 2011 (2011-12-22) * paragraphs [0012] - [0015] * | 1-9 | |
| A | CN 101 132 910 B (EASTMAN CHEM CO) 30 April 2014 (2014-04-30) * claims 9,15,40 * | 1-9 | |

The present search report has been drawn up for all claims

1

| Place of search | Date of completion of the search | Examiner |
|---|---|---|
| Munich | 24 July 2024 | Ferrer Santos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 16 1340

This annex lists the patent family members relating to the patent documents cited in the above-mentioned European search report. The members are as contained in the European Patent Office EDP file on
The European Patent Office is in no way liable for these particulars which are merely given for the purpose of information.

24-07-2024

| Patent document cited in search report | Publication date | Patent family member(s) | Publication date |
|---|---|---|---|
| JP 2003136583 A | 14-05-2003 | NONE | |
| EP 0926197 A1 | 30-06-1999 | AU 7937898 A | 25-01-1999 |
| | | CN 1239490 A | 22-12-1999 |
| | | EP 0926197 A1 | 30-06-1999 |
| | | US 2002198331 A1 | 26-12-2002 |
| | | WO 9901508 A1 | 14-01-1999 |
| JP H09272792 A | 21-10-1997 | NONE | |
| US 5888598 A | 30-03-1999 | NONE | |
| US 9890256 B2 | 13-02-2018 | CN 105764986 A | 13-07-2016 |
| | | EP 3075784 A1 | 05-10-2016 |
| | | JP 6177672 B2 | 09-08-2017 |
| | | JP 2015101681 A | 04-06-2015 |
| | | KR 20160090809 A | 01-08-2016 |
| | | US 2016347917 A1 | 01-12-2016 |
| | | WO 2015080004 A1 | 04-06-2015 |
| JP 2010139697 A | 24-06-2010 | JP 5586844 B2 | 10-09-2014 |
| | | JP 2010139697 A | 24-06-2010 |
| JP 2011256328 A | 22-12-2011 | JP 5720123 B2 | 20-05-2015 |
| | | JP 2011256328 A | 22-12-2011 |
| CN 101132910 B | 30-04-2014 | CN 101132909 A | 27-02-2008 |
| | | CN 101132910 A | 27-02-2008 |
| | | CN 101133122 A | 27-02-2008 |
| | | CN 101133123 A | 27-02-2008 |
| | | CN 101133124 A | 27-02-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001042626 A
- JP 2014198422 A
- JP 2000169623 A
- JP 2013159681 A


### Non-patent literature cited in the description


- Handbook of Saturated Polyester Resins. Nikkan Kogyo Shimbun, 22 December 1989, 224-225